# EUROPEAN PATENT SPECIFICATION

(11) **EP 4 448 895 B1**
(45) Date of publication and mention of the grant of the patent: **16.07.2025**
(21) Application number: 22823121.3
(22) Date of filing: 13.12.2022
(51) Int. Cl.: E05B 47/06, F16D 11/10, F16D 23/12, F16D 28/00, E05B 15/00, E05B 17/22, E05B 47/00, E05B 15/04, F16D 23/14

(54) **LOCK DEVICE AND LOCK SYSTEM**
VERRIEGELUNGSVORRICHTUNG UND VERRIEGELUNGSSYSTEM
DISPOSITIF ET SYSTÈME DE VERROUILLAGE

(30) Priority: 16.12.2021 SE 2151538
(43) Date of publication of application: 23.10.2024
(73) Proprietor: ASSA ABLOY AB, 107 23 Stockholm (SE)
(72) Inventor: ARBEGARD, Bernt, 8950-414 Altura (PT); SKARP, Daniel, 182 47 Enebyberg (SE); VON MATERN, Johan, 187 34 Täby (SE); NIEGMANN, Kaj, 141 42 Huddinge (SE); DAHLBÄCK, Robin, 120 78 Stockholm (SE)
(74) Representative: Kransell & Wennborg KB
(86) International application number: PCT/EP2022/085600
(87) International publication number: WO 2023/110856

(56) References cited:
- EP-A1- 1 707 712
- WO-A2-2011/105715

## Description

### Technical Field

The present invention generally relates to a lock device. In particular, a lock device comprising an electromechanical coupling device, and a lock system comprising such lock device, are provided.

### Background

In many existing mechanical lock cylinders, a key is rotated a full turn (360 degrees) between a locked position and an unlocked position, and the user cannot retract the key from the lock cylinder unless the key is positioned in any of these two positions. In order to remove the key, the user thus has to position the key in either the locked position or in the unlocked position, where the key is typically vertically oriented

Some electric lock systems comprise a mechanical lock case and an electric lock device for maneuvering the lock case. The lock device may comprise a rotatable input member, a rotatable output member and an electric coupling device selectively movable between an uncoupled state and a coupled state. A knob may be fixed to the input member for manual rotation of the input member. The output member may be a tailpiece engaging a lock follower of the lock case. By commanding the coupling device to adopt the coupled state, e.g. in response to a granted authorization request, the output member can be rotated by rotation of the knob to effect locking or unlocking of the lock system. The locking may comprise moving a bolt to a locked position in a strike opening of a strike plate. Conversely, the unlocking may comprise retracting the bolt from the strike opening to an unlocked position.

When the coupling device is in the uncoupled state, the knob and the input member can rotate freely. Since the coupling device can be brought to the coupled state at an arbitrary rotational position of the input member, the rotational position of the output member cannot be determined based on a rotational position of the input member. A user does therefore not know whether the lock system is locked or unlocked based on a rotational position of the knob.

In contrast to mechanical lock cylinders, the user of such electric lock system may not always know how much the knob has to be rotated to complete locking or unlocking. There is therefore a risk that the user leaves the lock system with a belief that it is locked when it is actually in a state where the bolt is positioned at an intermediate position between the locked position and the unlocked position. One reason for this risk is that it is easier to let go of the hand from the knob than to retract a key. Furthermore, the lock system may generate some sound when transitioning between the locked state and the unlocked state. Some users may take this sound as an indication that the lock system becomes locked/unlocked, when it does not. Moreover, a hook bolt may not be stable in its intermediate position. There is therefore a risk that the hook bolt moves from the intermediate position to the unlocked position, for example due to vibrations, after the user has intended to lock the lock system. If no measures are taken to prevent a user from leaving the bolt in an intermediate position, the lock system may fail to meet a lock standard.

EP 1707712 A1 discloses a cylinder lock assembly comprising a lock core, a rotor, a coupling device configured to adopt a disengaged state and an engaged state, a master circuit board, a sensor and a rotation seat.

WO 2011105715 A2 discloses a door lock comprising a handle body, a handle socket, a rotary bar, a locking control unit, a controller operating the locking control unit, a latch bolt and a position sensor for detecting the position of the latch bolt. The rotary bar is received in an insertion hole of a rotary socket.

### Summary

In order to provide an indication to the user that an electronic lock system is actually locked or actually unlocked, a sensor reading the position of a bolt engaging a strike opening of a strike plate may be provided in a lock case.

However, such arrangement complicates the design and makes it very difficult to retrofit an electric lock device to an existing lock case.

One object of the present invention is to provide an improved lock device.

A further object of the present invention is to provide a lock device enabling an increased level of security.

A still further object of the present invention is to provide a lock device enabling an improved user experience.

A still further object of the present invention is to provide a lock device that enables or improves retrofit to an existing lock case.

A still further object of the present invention is to provide a lock device having a compact design.

A still further object of the present invention is to provide a lock device having a less complicated design.

A still further object of the present invention is to provide a lock device solving several or all of the foregoing objects in combination.

A still further object of the present invention is to provide a lock system comprising a lock device, which lock system solves one, several or all of the foregoing objects.

According to a first aspect, there is provided a lock device comprising an input member rotatable about an input axis; an output member rotatable about an output axis; a manually rotatable knob fixed to the input member; an electromechanical coupling device configured to adopt an uncoupled state, where the input member can rotate freely about the input axis and rotation of the input member about the input axis is not transmitted to a rotation of the output member about the output axis, and a coupled state, where rotation of the input member about the input axis can be transmitted to a rotation of the output member about the output axis; an electric control system configured to control the coupling device to switch between the uncoupled state and the coupled state; and a sensor in signal communication with the control system, the sensor being configured to generate a position signal indicative of a position of the output member about the output axis.

The lock device enables a human user to easily make sure that the lock system is actually locked or actually unlocked. The lock device therefore improves security.

Due to the sensor, the lock device enables generation of various feedback associated with the actual position of the output member to the user of the lock device. For example, the lock device enables provision of a feedback to the user as to whether or not a lock system comprising the lock device is actually locked or unlocked. The user can thereby be informed as to whether or not the input member has been sufficiently rotated to effect locking or unlocking. Furthermore, this can for example also be valuable in case the user tries to lock the lock system with the lock device when the lock system is already locked from an opposite side of a door leaf, e.g. by means of a thumb turn. The lock device therefore enables an improved user experience.

In the uncoupled state, the input member may be rotated freely about the input axis without causing rotation of the output member about the output axis. In the coupled state, the coupling device may transmit the rotation of the input member about the input axis to a rotation of the output member about the output axis. The input member and the output member may or may not rotate in common when the coupling device adopts the coupled state. Thus, the input axis may or may not be coaxial with the output axis.

The signal communication between the sensor and the control system may be wired or wireless.

The lock device may be configured to be connected to an existing lock case. Due to the sensor, the lock device enables provision of information regarding the locking status of the lock case without using a sensor in the lock case. This greatly facilitates retrofitting of the lock device to an existing lock case and reduces design complexity.

The lock device may comprise an electric user interface. The user interface may comprise a light and/or a display. The user interface may provide various types of feedback associated with the operation of the lock device. The user interface may be in signal communication with the control system.

Alternatively, or in addition, the user interface may be configured to receive a credential from the user. To this end, the user interface may comprise an antenna for wirelessly receiving the credential, for example via RFID (radiofrequency identification), NFC (near-field communication) or BLE (Bluetooth low energy). Alternatively, or in addition, the user interface may be configured to receive the credential by being touched by the user, for example by comprising a keypad, a finger sensor or other biometric sensor.

In any case, the user interface may be configured to send an access signal to the control system based on a received credential from the user. The control system may be configured to evaluate the access signal. Upon granted evaluation, the control system commands the coupling device to switch from the uncoupled state to the coupled state. Upon denied evaluation, the control system does not command the coupling device to switch from the uncoupled state to the coupled state.

The control system may comprise at least one data processing device and at least one memory having at least one computer program stored thereon, the at least one computer program comprising program code which, when executed by the at least one data processing device, causes the at least one data processing device to perform, or command performance of, any step described herein.

The output member may be an output shaft, such as a tailpiece. The input member may be an input shaft.

The output member may be configured to engage a lock follower of a lock case. Thus, by rotating the input member when the coupling device is in the coupled state, the lock follower can be rotated via the output member. In this way, a bolt may be moved between a locked position and an unlocked position to lock and unlock a lock system. The position signal from the sensor can therefore also be indicative of a position of the bolt, e.g. if the bolt is in a locked position, in an unlocked position or in an intermediate position between the locked position and the unlocked position. Should the bolt be moved to the locked position or the unlocked position from an opposite side of a door leaf with respect to the lock device, for example by turning a thumb turn, the new position of the bolt can be detected by the sensor.

The control system may be configured to command issuance of a feedback to a user based on the position signal or an absence of the position signal. The feedback may for example be audible, visual, tactile and/or electric. One example of audible feedback is sound. One example of visual feedback is light. One example of tactile feedback is vibration, e.g. in the knob fixed to the input member. One example of electric feedback is an electric signal sent to an external device, such as a mobile phone. In this case, the mobile phone may in turn provide audible, visual and/or tactile feedback to the user, based on the electric signal. The electric signal may also be sent to a central management system to monitor locking status of a plurality of lock systems. The feedback enables the lock device to function in a manner similar to mechanical lock cylinders, where a key cannot be retracted unless the key is positioned in a distinct position.

The control system may be configured to command issuance of the feedback when the output member is in one of at least one target position.

According to one variant, the control system is configured to command the coupling device to switch from the coupled state to the uncoupled state only when the output member has reached one of the at least one target position. The control system may be configured to command issuance of an alarm in case the output member has not reached one of at least one target position within a time period, for example five seconds.

Alternatively, or in addition, the feedback may be conditional on that the coupling device adopts the uncoupled state. For example, the user may present a credential to the lock device. Upon granted authorization, the coupling device adopts the coupled state. The user may then rotate the input member via the knob to lock the lock system. The control system may then command the coupling device to adopt the uncoupled state. Upon adopting the uncoupled state, the control system commands issuance of the feedback to the user. In this way, it can be prevented that an unauthorized person unlocks the lock system before the coupling device has adopted the uncoupled state.

The control system may be configured to command issuance of a first type of feedback when the output member is not in a target position, and to command issuance of a second type of feedback, different from the first type of feedback, when the output member is in one of at least one target position.

The at least one target position may comprise a locked target position corresponding to a locked follower position of the lock follower, and an unlocked target position corresponding to an unlocked follower position of the lock follower.

The sensor may be configured to sense the position of the output member. Alternatively, the sensor may be configured to sense a position of a different member from which the position of the output member can be determined, for example via a known transmission ratio of a transmission.

The sensor may be a proximity sensor. Examples of proximity sensors include a Hall effect sensor and an optical sensor.

When the lock device comprises a proximity sensor, the lock device may further comprise at least one proximity target. In this case, proximity of each proximity target, as sensed by the sensor, may correspond to a unique position of the output member about the output axis. The at least one proximity target may be positioned on the output member, or on a different member based on which the rotational position of the output member can be determined.

When the sensor is a Hall effect sensor, each proximity target may be a magnet. The magnets may be of different magnetic strengths and/or having different polarities facing the sensor to make them unique to the sensor. When the sensor is an optical sensor, the sensor may be configured to send light and each proximity target may be a reflector for reflecting the light.

Alternatively, or in addition, the sensor may be configured to determine an absolute position of the output member about the output axis. Such sensor may be an absolute rotary encoder, for example realized by an optical encoder, or by a Hall effect sensor and a multipole encoder ring comprising a plurality of magnets enclosing the output member, such as at least 6 magnets.

The control system may be configured to determine a rotational direction of the output member about the output axis based on the position signal. For example, when the lock device comprises a plurality of unique proximity targets, and/or when the lock device comprises a sensor configured to determine an absolute position of the output member, the control system can also conclude in which direction about the output axis the output member rotates. This may for example be useful in case the lock follower has to be rotated several full turns in order to move the bolt between the locked position and the unlocked position, for example in a triple throw lock case.

The control system may be configured to command issuance of a first type of feedback when the output member rotates in a correct direction, and to command issuance of a second type of feedback, different from the first type of feedback, when the output member rotates in an incorrect direction. A correct direction may be a locking direction when the lock system is unlocked, and/or an unlocking direction when the lock system is locked. Conversely, an incorrect direction may be an unlocking direction when the lock system is already unlocked, and/or a locking direction when the lock system is already locked. The feedback may be of any type according to the present disclosure.

The knob may be integrally formed with the input member or rigidly connected, directly or indirectly, to the input member. The user interface may be provided in the knob.

The lock device may further comprise an electromagnetic generator arranged to electrically power the coupling device and the control system. In this case, the generator may be arranged to be driven to harvest electric energy by rotation of the input member about the input axis. The lock device may thus be an energy harvesting lock device. The user may initially rotate the input member to harvest electric energy when the coupling device is in the uncoupled state. The generator may comprise a stator and a rotor rotatable relative to the stator to generate electric energy.

The control system may be configured to determine the position of the output member additionally based on a voltage of the generator. By considering the voltage of the generator, it can be concluded in which direction the input member rotates. The control system may be configured to command issuance of a first type of feedback when the input member rotates in a correct direction, and to command issuance of a second type of feedback, different from the first type of feedback, when the input member rotates in an incorrect direction, in the same way as mentioned above.

The lock device according to the present invention can however also function without a generator, for example when the coupling device is electrically powered by a mains supply or purely by a battery.

According to a second aspect, there is provided a lock system comprising a lock case having a lock follower and the lock device according to the first aspect. The output member may engage the lock follower. The output member and the lock follower may for example be arranged to rotate in common about the output axis. The lock case may comprise a bolt movable between a locked position and an unlocked position. The lock case may be configured such that the bolt always moves in response to rotation of the lock follower. The bolt may for example be a latch bolt, a hook bolt or a dead bolt. The control system may be configured to determine whether the lock case is in a locked position or an unlocked position based on the position signal.

### Brief Description of the Drawings

Further details, advantages and aspects of the present invention will become apparent from the following description taken in conjunction with the drawings, wherein:
- Fig. 1:: schematically represents a lock system comprising a lock device;
- Fig. 2:: schematically represents a partial perspective side view of the lock device comprising one example of an electromechanical coupling device in an uncoupled state;
- Fig. 3:: schematically represents a further partial perspective side view of the lock device;
- Fig. 4:: schematically represents a partial perspective side view of the lock device after movement of an actuating member from an uncoupling actuating position to a coupling actuating position;
- Fig. 5:: schematically represents a partial perspective side view of the lock device after rotation of an input member and a coupling member;
- Fig. 6:: schematically represents a partial perspective side view of the lock device when the coupling device adopts a coupled state;
- Fig. 7a:: schematically represents positions of components of the lock system with a single proximity target when the lock system is unlocked;
- Fig. 7b:: schematically represents positions of the components in Fig. 7a when a knob is rotated;
- Fig. 7c:: schematically represents positions of the components in Figs. 7a and 7b when the coupling device is in the coupled state and the knob is rotated further;
- Fig. 7d:: schematically represents positions of the components in Fig. 7a to 7c when the coupling device is in the coupled state and the knob is rotated still further;
- Fig. 8a:: schematically represents positions of components of the lock system with a plurality of proximity targets when the lock system is unlocked;
- Fig. 8b:: schematically represents positions of the components in Fig. 8a when the knob is rotated;
- Fig. 8c:: schematically represents positions of the components in Figs. 8a and 8b when the coupling device is in the coupled state and the knob is rotated further;
- Fig. 8d:: schematically represents positions of the components in Fig. 8a to 8c when the coupling device is in the coupled state and the knob is rotated still further;
- Fig. 9a:: schematically represents a partial side view of a further example of a lock device comprising a further example of a coupling device in an uncoupled state;
- Fig. 9b:: schematically represents a side view of the lock device in Fig. 9a when the coupling device adopts a coupled state; and
- Fig. 9c:: schematically represents a side view of the lock device in Figs. 9a and 9b when an input shaft is rotated.

### Detailed Description

In the following, a lock device comprising an electromechanical coupling device, and a lock system comprising such lock device, will be described. The same or similar reference numerals will be used to denote the same or similar structural features.

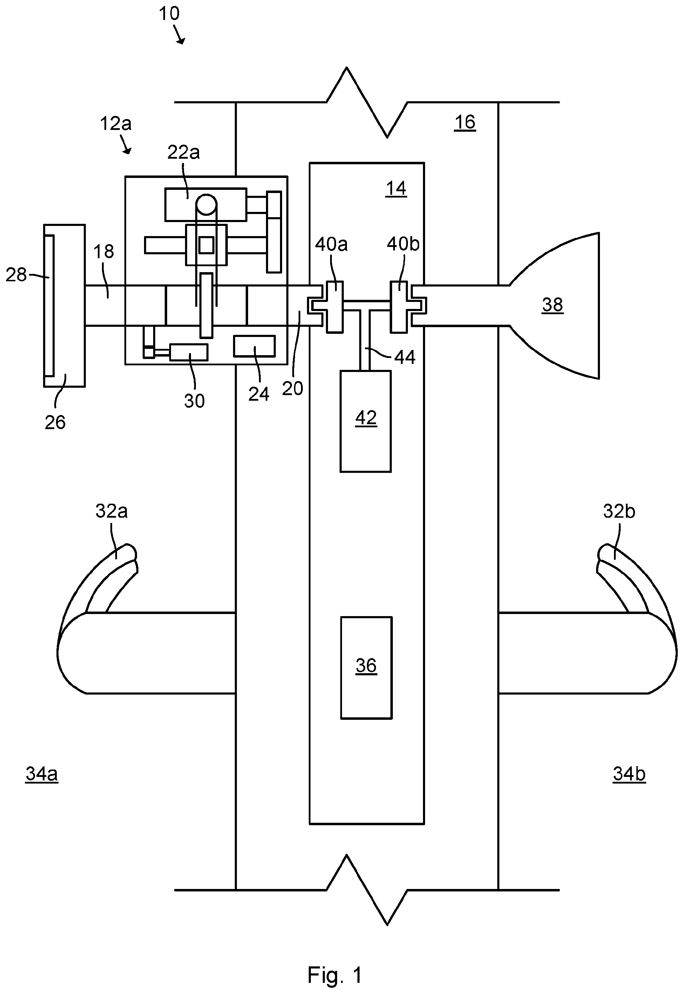

Fig. 1 schematically represents a lock system 10. The lock system 10 comprises an electric lock device 12a. The lock system 10 of this example further comprises a lock case 14. Fig. 1 further shows a door leaf 16 rotatable relative to a frame (not shown). The lock case 14 is installed in the door leaf 16.

The lock device 12a comprises an input shaft 18, an output shaft 20, an electromechanical coupling device 22a and an electric control system 24. The input shaft 18 and the output shaft 20 are examples of an input member and an output member, respectively, according to the present disclosure. The output shaft 20 is here exemplified as a tailpiece. The control system 24 is in signal communication with the coupling device 22a.

The lock device 12a of this example further comprises a knob 26. The knob 26 is here fixed to the input shaft 18. A user may for example grab and rotate the knob 26.

The lock device 12a of this example further comprises a display 28. The display 28 provides one example of a user interface according to the present disclosure. The display 28 is in signal communication with the control system 24. In this example, the display 28 is provided on the knob 26.

The lock device 12a of this example further comprises an electromagnetic generator 30. The generator 30 is arranged to be driven by rotation of the input shaft 18 to harvest electric energy. In this example, the generator 30 is arranged to electrically power the control system 24, the coupling device 22a and the display 28, for example via one or more capacitors.

The lock system 10 of this example further comprises an exterior handle 32a at an exterior side 34a of the door leaf 16, and an interior handle 32b at an interior side 34b of the door leaf 16. As shown in Fig. 1, the lock device 12a is here positioned at the exterior side 34a. The lock case 14 of this example further comprises a latch bolt 36. The latch bolt 36 can be maneuvered by the handles 32a and 32b.

The lock system 10 of this example further comprises a thumb turn 38 at the interior side 34b. The lock case 14 of this example further comprises an exterior lock follower 40a and an interior lock follower 40b. As shown in Fig. 1, the output shaft 20 engages the lock follower 40a for common rotation, and the thumb turn 38 engages the lock follower 40b for common rotation.

The lock case 14 of this example further comprises a bolt 42, here exemplified as a dead bolt. As an alternative to a dead bolt, the bolt 42 may be a hook bolt. The bolt 42 can be maneuvered by either the lock device 12a or the thumb turn 38. The lock followers 40a and 40b are rotatable between a locked follower position and an unlocked follower position. In the locked follower position, the bolt 42 is in a locked position engaging a strike opening in a strike plate (not shown) in the frame. In the unlocked follower position, the bolt 42 is in an unlocked position retracted from the strike opening.

The lock case 14 further comprises a linkage 44. The linkage 44 is configured to transmit a movement of the lock followers 40a and 40b from the locked follower position to the unlocked follower position to a movement of the bolt 42 from the locked position to the unlocked position, and vice versa. In one alternative example of a lock case according to the present disclosure, the lock case is configured to transmit a movement of a lock follower to a movement of a latch bolt.

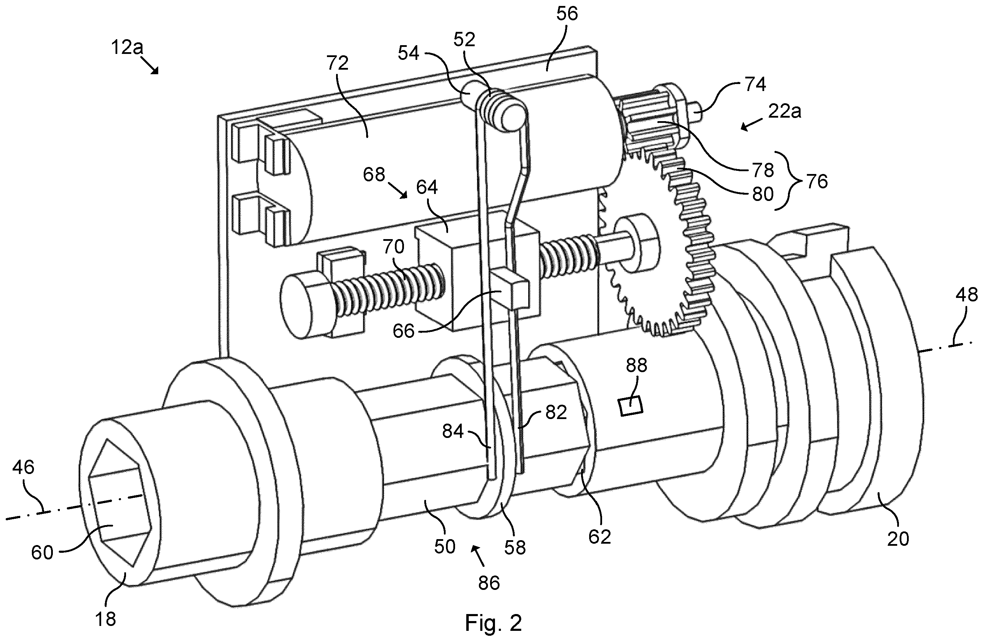

Fig. 2 schematically represents a partial perspective side view of the lock device 12a. In Fig. 2, the knob 26 and the generator 30 are omitted. The coupling device 22a shown in Fig. 2 is one of many examples of a coupling device according to the present disclosure.

The input shaft 18 is rotatable about an input axis 46. The output shaft 20 is rotatable about an output axis 48. In this example, the input axis 46 and the output axis 48 are concentric, i.e. constituted by a common rotation axis.

The lock device 12a of this example further comprises a coupling shaft 50 and a torsion spring 52. The torsion spring 52 is wound around a spring pin 54. The lock device 12a further comprises a stationary structure, here exemplified as a plate 56.

The coupling shaft 50 is linearly movable, here along the input axis 46 and the output axis 48. The coupling shaft 50 is arranged between the input shaft 18 and the output shaft 20.

The coupling shaft 50 comprises a collar 58. Except for the collar 58, the coupling shaft 50 has a uniform polygonal exterior profile along its length, here a hexagonal exterior profile. The coupling shaft 50 is shape-fitted into an input opening 60 in the input shaft 18 and can move axially along the input axis 46 relative to the input shaft 18 while the shape-fit is maintained. The input shaft 18 and the coupling shaft 50 therefore always rotate in common.

The output shaft 20 comprises an output opening 62. The output opening 62 has an interior profile corresponding to the exterior profile of the coupling shaft 50.

The coupling device 22a of this example comprises an actuating member, here exemplified as a nut 64. The nut 64 is linearly movable and comprises an actuating pin 66.

In Fig. 2, the coupling device 22a is in an uncoupled state, here exemplified as the nut 64 being in an uncoupling actuating position 68. When the nut 64 is in the uncoupling actuating position 68, a rotation of the input shaft 18 about the input axis 46 is not transmitted to a rotation of the output shaft 20 about the output axis 48.

The coupling device 22a of this example further comprises a lead screw 70. The nut 64 threadingly engages the lead screw 70.

The coupling device 22a of this example further comprises an electric motor 72. The electric motor 72 comprises a rotatable motor shaft 74. The electric motor 72 is secured to the plate 56. The electric motor 72 is controlled by the control system 24.

The coupling device 22a of this example further comprises a transmission 76. The transmission 76 comprises a first gear wheel 78 and a second gear wheel 80 meshing with the first gear wheel 78. The first gear wheel 78 is fixed to the motor shaft 74. The second gear wheel 80 is fixed to the lead screw 70. The transmission 76 is thus arranged to transmit a rotation of the motor shaft 74 to a rotation of the lead screw 70. The electric motor 72 is thereby arranged to drive the lead screw 70 to rotate.

The torsion spring 52 comprises a first leg 82 and a second leg 84. The first leg 82 and the second leg 84 are movable away from each other against a deformation of the torsion spring 52. In the state of the torsion spring 52 in Fig. 2, the torsion spring 52 is deformed such that the first leg 82 and the second leg 84 pinches each of the actuating pin 66 and the collar 58.

When the nut 64 is in the uncoupling actuating position 68 according to Fig. 2, the first leg 82 and the second leg 84 hold the coupling shaft 50 in an uncoupled position 86. In the uncoupled position 86, the coupling shaft 50 is separated from the output shaft 20. A rotation of the coupling shaft 50 is therefore not transmitted to a rotation of the output shaft 20. The output shaft 20 is thus uncoupled from the input shaft 18 when the coupling shaft 50 is in the uncoupled position 86.

In order to couple the input shaft 18 to the output shaft 20, the electric motor 72 is driven to rotate the lead screw 70, e.g. in response to a granted evaluation of an authorization request. The rotation of the lead screw 70 causes the nut 64 to move linearly (to the right in Fig. 2) from the uncoupling actuating position 68 to a coupling actuating position.

As shown in Fig. 2, the lock device 12a further comprises a proximity target 88. In this example, the proximity target 88 is positioned on the output shaft 20. The proximity target 88 of this example is a magnet. In the view in Fig. 2, the proximity target 88 is visible. In reality, the proximity target 88 may however face the plate 56 in the state of the lock device 12a in Fig. 2.

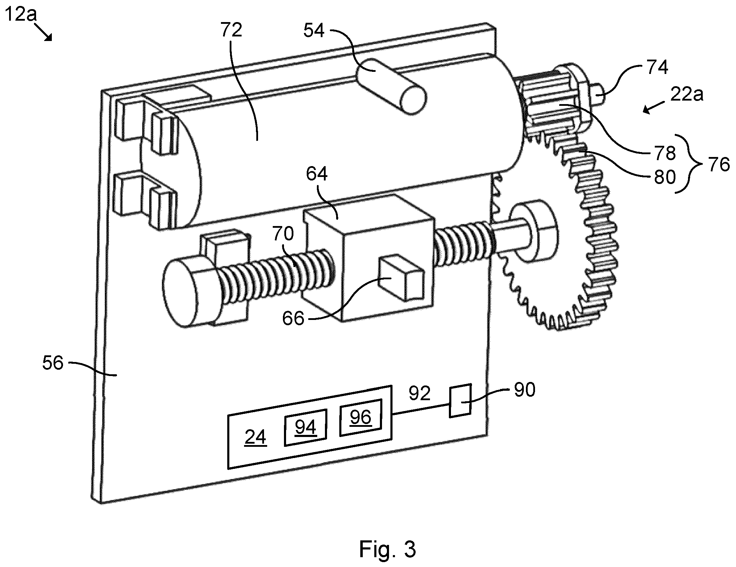

Fig. 3 schematically represents a further partial perspective side view of the lock device 12a. In Fig. 3, the input shaft 18, the coupling shaft 50, the output shaft 20 and the torsion spring 52 are additionally omitted.

In Fig. 3, it can be seen that the lock device 12a further comprises a sensor 90. The sensor 90 of this example is a proximity sensor. More specifically, the sensor 90 of this example is a Hall effect sensor. The sensor 90 is configured to sense proximity of the proximity target 88, here by measuring a magnetic field from the proximity target 88. The sensor 90 is thereby configured to generate a position signal 92 indicative of a position of the output shaft 20 about the output axis 48. The position signal 92 is sent to the control system 24. The sensor 90 is here positioned on the plate 56.

As further shown in Fig. 3, the control system 24 of this example comprises a data processing device 94 and a memory 96. The memory 96 has a computer program stored thereon. The computer program comprises program code which, when executed by the data processing device 94, causes the data processing device 94 to perform, or command performance of, various steps described herein.

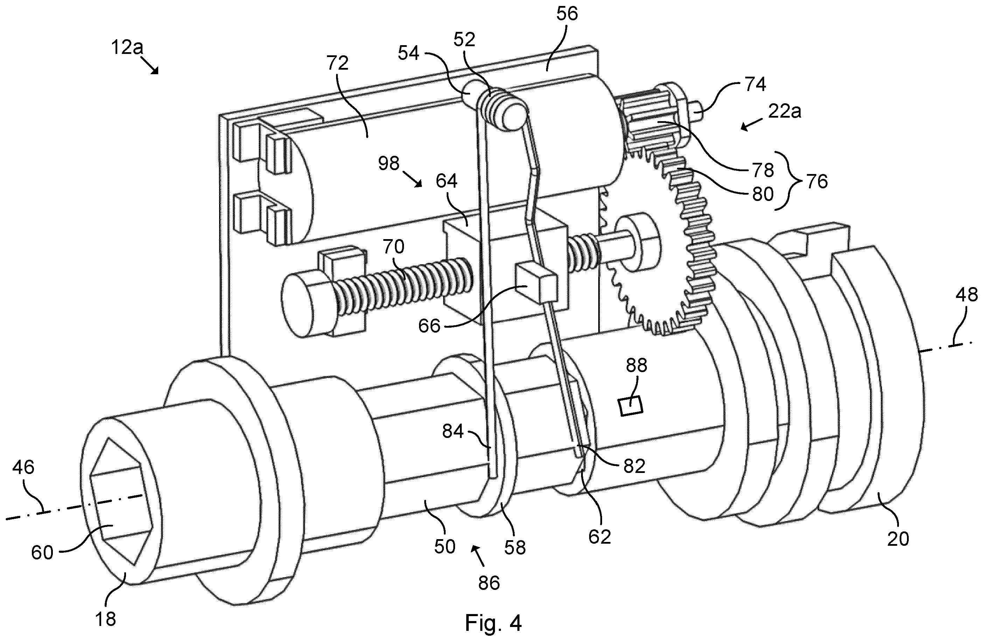

Fig. 4 schematically represents a partial perspective side view of the lock device 12a. In Fig. 4, the nut 64 has moved from the uncoupling actuating position 68 to the illustrated coupling actuating position 98. In Fig. 4, a valid credential has been presented and the control system 24 has thereby commanded the coupling device 22a to drive the nut 64 to the coupling actuating position 98, which is one example of a coupled state of the coupling device 22a.

During movement of the nut 64 from the uncoupling actuating position 68 in Fig. 2 to the coupling actuating position 98 in Fig. 4, the actuating pin 66 pushes the first leg 82 away from the second leg 84. The torsion spring 52 is thereby further deformed. Due to the deformation of the torsion spring 52, the second leg 84 pushes on the collar 58 and thereby exerts a constant force on the coupling shaft 50 (to the right in Fig. 4). Once the nut 64 has moved to the coupling actuating position 98, the electric motor 72 is stopped. Thus, no more electric energy needs to be supplied to the lock device 12a when adopting the state in Fig. 3.

Since the coupling shaft 50 is not rotationally aligned with the output shaft 20 in Fig. 3, the coupling shaft 50 cannot enter the output opening 62 to engage the output shaft 20. The nut 64 can however move from the uncoupling actuating position 68 to the coupling actuating position 98 regardless of whether or not the coupling shaft 50 is rotationally aligned with the output shaft 20.

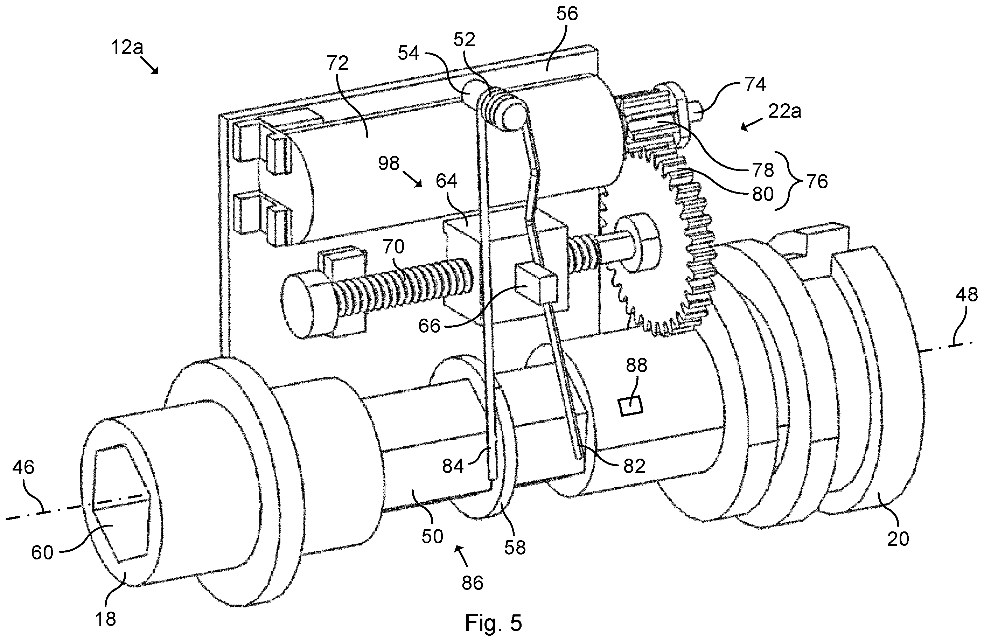

Fig. 5 schematically represents a partial perspective side view of the lock device 12a. In Fig. 5, the input shaft 18 is rotated about the input axis 46 by manual rotation of the knob 26 such that also the coupling shaft 50 is rotated to align with the output shaft 20. Once the coupling shaft 50 is aligned with the output shaft 20 according to Fig. 5, the second leg 84 pushes the coupling shaft 50 into the output shaft 20. The coupling shaft 50 thereby moves from the uncoupled position 86 to a coupled position.

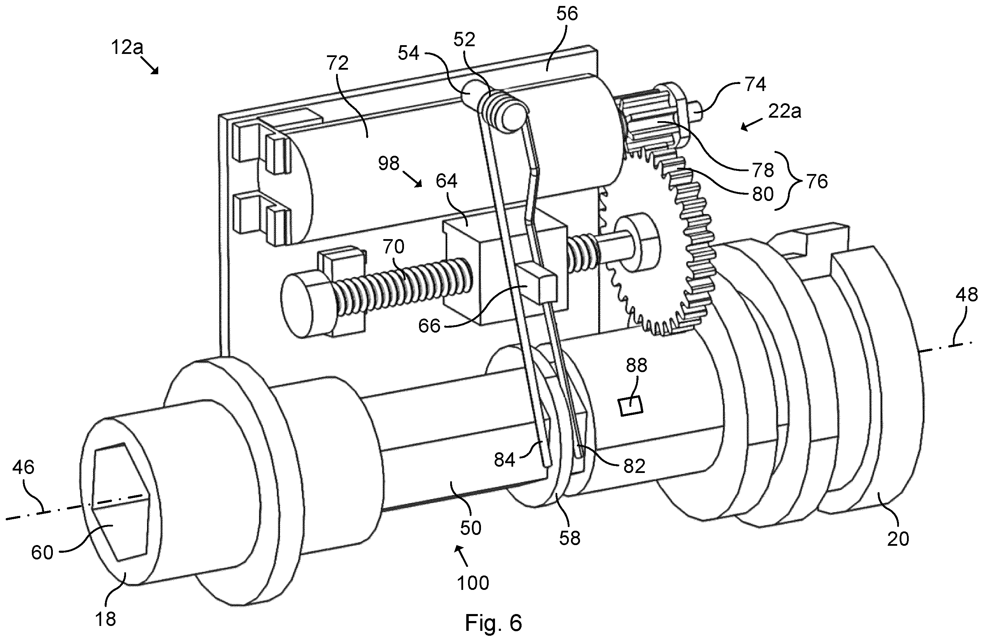

Fig. 6 schematically represents a partial perspective side view of the lock device 12a after movement of the coupling shaft 50 from the uncoupled position 86 to the coupled position 100. The movement of the nut 64 from the uncoupling actuating position 68 to the coupling actuating position 98 is transmitted by the torsion spring 52 to the movement of the coupling shaft 50 from the uncoupled position 86 to the coupled position 100.

When the coupling shaft 50 adopts the coupled position 100, the coupling shaft 50 enters the output opening 62 and thereby engages the output shaft 20 by means of a shape fit. A rotation of the input shaft 18 about the input axis 46 is now transmitted by the coupling shaft 50 to a rotation of the output shaft 20 about the output axis 48. When the coupling device 22a is in the coupled state 98 and the coupling shaft 50 is in the coupled position 100, a user can rotate the output shaft 20 by rotating the input shaft 18 by the knob 26 to lock or unlock the lock system 10.

The electric motor 72 may be automatically commanded to drive the lead screw 70 in an opposite direction after expiration of a certain time limit, e.g. five seconds. The rotation of the lead screw 70 thereby causes the nut 64 to move linearly along the actuating axis (to the left in Fig. 6) from the coupling actuating position 98 back to the uncoupling actuating position 68.

When the nut 64 moves from the coupling actuating position 98 back to the uncoupling actuating position 68, the actuating pin 66 pushes the second leg 84 (to the left in Fig. 6). Since the coupling shaft 50 is not prevented to move from the coupled position 100 back to the uncoupled position 86, the movement of the second leg 84 causes the first leg 82 to push the collar 58 to move the coupling shaft 50 from the coupled position 100 back to the uncoupled position 86.

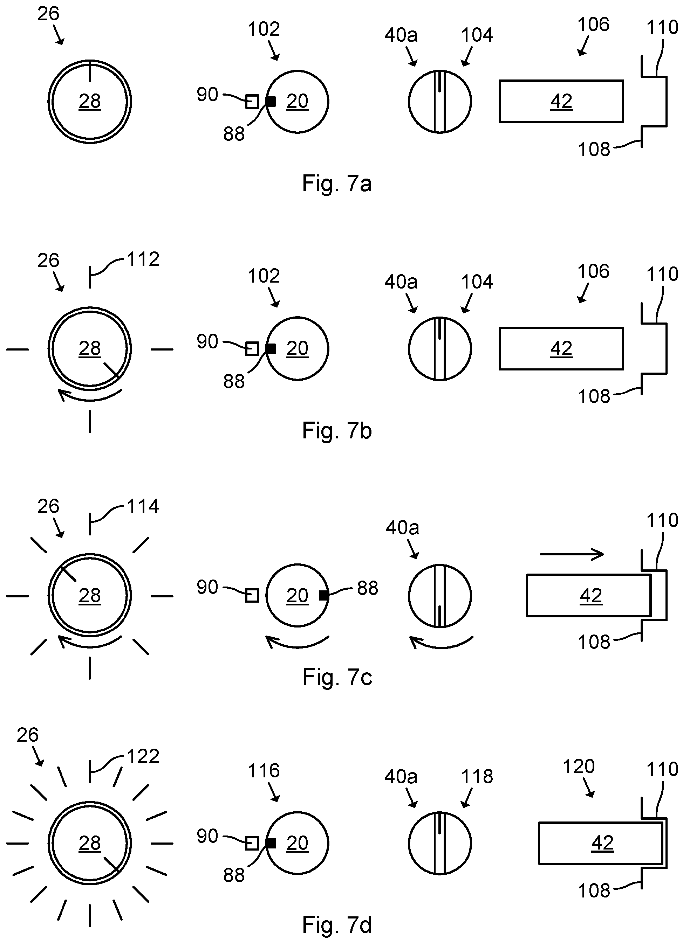

Fig. 7a schematically represents positions of the knob 26, the output shaft 20, the lock follower 40a and the bolt 42 when the lock system 10 is unlocked. In Fig. 7a, the coupling device 22a is in the uncoupled state 68. The output shaft 20 is in an unlocked target position 102. The control system 24 is aware that the output shaft 20 is in the unlocked target position 102 based on the position signal 92 indicating proximity of the proximity target 88 to the sensor 90.

Moreover, in Fig. 7a, the lock follower 40a is in the unlocked follower position 104. The bolt 42 is the unlocked position 106. In Fig. 7a, the strike plate 108 and the strike opening 110 in the strike plate 108 can also be seen. In this example, the lock follower 40a of the lock case 14 has to be rotated 360 degrees to move the bolt 42 between the unlocked position 106 and the locked position.

Fig. 7b schematically represents positions of the components in Fig. 7a. In Fig. 7b, the knob 26 is rotated by a user. The rotation of the knob 26 causes the input shaft 18 to drive the generator 30 to harvest electric energy. Based on the voltage from the generator 30, the control system 24 determines the rotational direction of the knob 26 and the input shaft 18, which is here a locking direction (clockwise in Fig. 7b). Since the bolt 42 is in the unlocked position 106, the locking direction is considered by the control system 24 to be a correct direction. In response, the control system 24 commands issuance of feedback 112 to the user. The feedback 112 is here exemplified as a blinking green light emitted from the display 28.

Should the user rotate the knob 26 in an unlocking direction (counterclockwise in Fig. 7b) when the bolt 42 is in the unlocked position 106, the unlocking direction is considered by the control system 24 to be an incorrect direction. In response, the control system 24 would command issuance of a different type of feedback to the user, such as a blinking red light emitted from the display 28. In this way, the user is informed that the lock device 12a is handled in an incorrect way.

Fig. 7c schematically represents positions of the components in Figs. 7a and 7b. In Fig. 7c, the control system 24 has commanded the coupling device 22a to adopt the coupled state 98 in response to a granted authorization request. The knob 26 is then rotated further by the user in the clockwise direction. Since the coupling device 22a is in the coupled state 98, the rotation of the knob 26 causes the output shaft 20 to rotate in the clockwise direction. In Fig. 7c, the output shaft 20 has rotated 180 degrees from the unlocked target position 102. The control system 24 becomes aware that the output shaft 20 is no longer in the unlocked target position 102 based on the position signal 92 indicating absence of proximity of the proximity target 88 to the sensor 90.

Since the output shaft 20 engages the lock follower 40a, also the lock follower 40a rotates in the clockwise direction. Due to the rotation of the lock follower 40a, the bolt 42 moves from the unlocked position 106 towards the strike opening 110. In Fig. 7c, the bolt 42 is in an intermediate position between the unlocked position 106 and the locked position.

The control system 24 is aware that the bolt 42 is in the intermediate position since the proximity target 88 is not in proximity to the sensor 90, which indicates that the lock follower 40a has left the unlocked follower position 104, which in turn indicates that the bolt 42 has left the unlocked position 106. In response, the control system 24 commands issuance of feedback 114 to the user. The feedback 114 is here exemplified as a yellow light emitted from the display 28. Due to the feedback 114, the user becomes aware that the rotation of the knob 26 is incomplete and that the bolt 42 has not yet been brought to its locked position. The user is therefore guided by the feedback 114 to continue rotating the knob 26.

Fig. 7d schematically represents positions of the components in Fig. 7a to 7c. In Fig. 7d, the coupling device 22a remains in the coupled state 98 and the knob 26 has been rotated still further such that the output shaft 20 has come to a locked target position 116. As shown in Fig. 7d, the proximity target 88 is again in proximity of the sensor 90 in the locked target position 116. The control system 24 is aware that the output shaft 20 is in the locked target position 116 based on the position signal 92 indicating proximity of the proximity target 88 to the sensor 90. Based on the information that the output shaft 20 is in the locked target position 116, the control system 24 concludes that the lock follower 40a is in a locked follower position 118 and that the bolt 42 is in a locked position 120 fully engaging the strike opening 110. The control system 24 thus always knows whether the lock system 10 is locked or unlocked. The control system 24 then commands issuance of feedback 122 to the user. The feedback 122 is here exemplified as a constant green light emitted from the display 28. The user is thereby notified that the locking of the lock system 10 has been completed. In this example, haptic feedback is also generated to the user "for free" since the user can feel in the knob 26 when the bolt 42 is stopped in the strike opening 110.

The above process described in connection with Figs. 7a to 7d may be reversed for unlocking the lock system 10. The lock device 12a improves security since it enables the user to easily make sure that the lock system 10 is actually locked or actually unlocked. The lock device 12a comprising the sensor 90 and a single proximity target 88 also has a very cost-efficient and compact design.

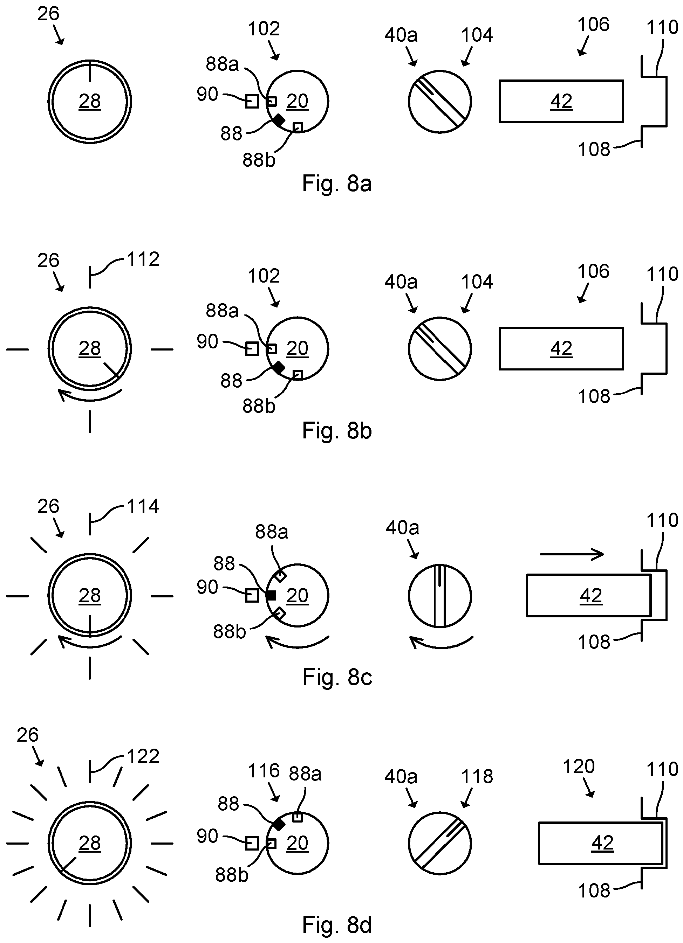

Fig. 8a schematically represents positions of the knob 26, the output shaft 20, the lock follower 40a and the bolt 42 when the lock system 10 is unlocked. Mainly differences from Fig. 7a will be described. In the example in Fig. 8a, the lock follower 40a has to be rotated 90 degrees to move the bolt 42 between the unlocked position 106 and the locked position 120.

Moreover, the lock device 12a in Fig. 8a comprises a plurality of proximity targets 88, 88a and 88b. Also in this example, each proximity target 88, 88a and 88b is positioned on the output shaft 20. The proximity target 88 is arranged to face the sensor 90 with a first type of polarity (such as a north pole) and each of the proximity targets 88a and 88b is arranged to face the sensor 90 with a second type of polarity (such as a south pole), different from the first type of polarity. In the unlocked target position 102 of the output shaft 20, the proximity target 88a is in proximity to the sensor 90.

Fig. 8b schematically represents positions of the components in Fig. 8a. In Fig. 8b, the knob 26 is rotated in the same way as in Fig. 7b to harvest electric energy and feedback 112 is issued to the user.

Fig. 8c schematically represents positions of the components in Figs. 8a and 8b. In Fig. 8c, the control system 24 has commanded the coupling device 22a to adopt the coupled state 98 in response to a granted authorization request. The knob 26 is then rotated further by the user in the clockwise direction. Since the coupling device 22a is in the coupled state 98, the rotation of the knob 26 causes the output shaft 20 to rotate in the clockwise direction. In Fig. 8c, the output shaft 20 has rotated 45 degrees from the unlocked target position 102. The control system 24 becomes aware that the output shaft 20 is no longer in the unlocked target position 102 based on the position signal 92 indicating proximity of the proximity target 88 to the sensor 90. In Fig. 8c, the bolt 42 is in an intermediate position between the unlocked position 106 and the locked position 120 and moves into the strike opening 110.

The control system 24 is aware that the bolt 42 is in the intermediate position since the proximity target 88 is in proximity to the sensor 90, which indicates that the lock follower 40a has left the unlocked follower position 104, which in turn indicates that the bolt 42 has left the unlocked position 106. In response, the control system 24 commands issuance of the feedback 114 to the user guiding the user to continue rotating the knob 26. Moreover, the detection of the proximity target 88 indicates clockwise direction of the output shaft 20.

Fig. 8d schematically represents positions of the components in Fig. 8a to 8c. In Fig. 8d, the coupling device 22a remains in the coupled state 98 and the knob 26 has been rotated still further such that the output shaft 20 has come to the locked target position 116. As shown in Fig. 8d, the proximity target 88b is now in proximity of the sensor 90 in the locked target position 116. The control system 24 is aware that the output shaft 20 is in the locked target position 116 based on the position signal 92 indicating proximity of the proximity target 88b to the sensor 90. Based on the information that the output shaft 20 is in the locked target position 116, the control system 24 concludes that the lock follower 40a is in the locked follower position 118 and that the bolt 42 is in the locked position 120 fully engaging the strike opening 110. The control system 24 therefore commands issuance of the feedback 122 to the user notifying the user that the locking of the lock system 10 has been completed. The above process described in connection with Figs. 8a to 8d may be reversed for unlocking the lock system 10.

As can be gathered from the two examples in Figs. 7a to 8d, the sensor 90 enables the lock device 12a to easily be retrofitted to many different types of lock cases 14. In case the sensor 90 is an absolute sensor, such as a rotary encoder, the flexibility of the lock device 12a to be connected with many different types of lock cases 14 is further improved.

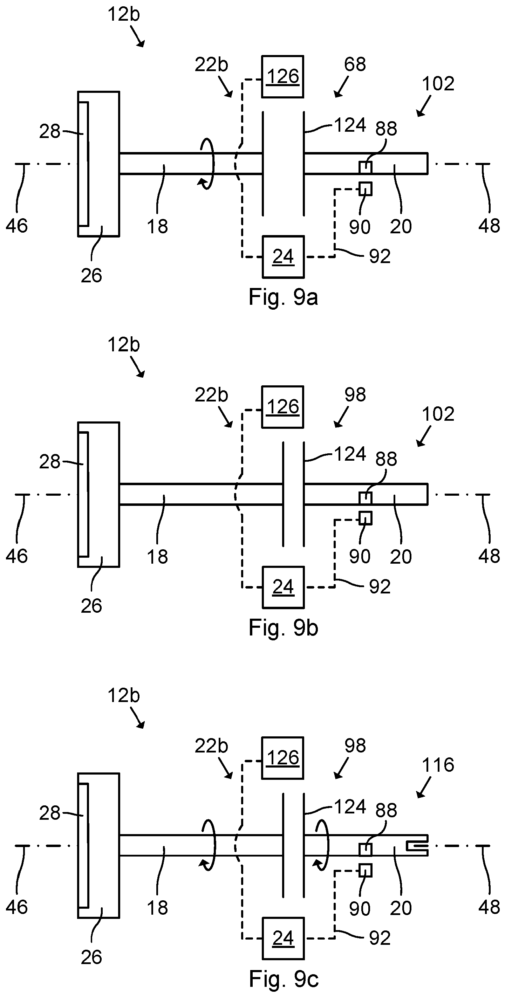

Fig. 9a schematically represents a partial side view of a further example of a lock device 12b. The lock device 12b may be used instead of the lock device 12a in the lock system 10 in Fig. 1. The lock device 12b differs from the lock device 12a by comprising a different type of electromechanical coupling device 22b instead of the coupling device 22a.

The coupling device 22b of this example comprises a clutch 124 and an electromechanical actuator 126 controlling the clutch 124. In Fig. 9a, the clutch 124 is controlled by the actuator 126 to be open. The coupling device 22b thereby adopts an uncoupled state 68, where the input shaft 18 can be rotated freely without the rotation being transmitted to a rotation of the output shaft 20. The output shaft 20 thereby remains in the unlocked target position 102.

Fig. 9b schematically represents a side view of the lock device 12b. In Fig. 9b, the clutch 124 is controlled by the actuator 126 to be closed, e.g. in response to an authorization signal from the control system 24. The coupling device 22b thereby adopts a coupled state 98.

Fig. 9c schematically represents a side view of the lock device 12b. As shown in Fig. 9c, the locking member 26 can be rotated from the unlocked target position 102 to the locked target position 116 by rotation of the input shaft 18 when the coupling device 22b adopts the coupled state 98.

While the present invention has been described with reference to exemplary embodiments, it will be appreciated that the present invention is not limited to what has been described above. For example, it will be appreciated that the dimensions of the parts may be varied as needed. Accordingly, it is intended that the present invention may be limited only by the scope of the claims appended hereto.

## Claims

1. A lock device (12a; 12b) comprising:
- an input member (18) rotatable about an input axis (46);
- a manually rotatable knob (26) fixed to the input member (18);
- an output member (20) rotatable about an output axis (48);
- an electromechanical coupling device (22a; 22b) configured to adopt an uncoupled state (68), where the input member (18) can rotate freely about the input axis (46) and rotation of the input member (18) about the input axis (46) is not transmitted to a rotation of the output member (20) about the output axis (48), and a coupled state (98), where rotation of the input member (18) about the input axis (46) can be transmitted to a rotation of the output member (20) about the output axis (48);
- an electric control system (24) configured to control the coupling device (22a; 22b) to switch between the uncoupled state (68) and the coupled state (98); and
- a sensor (90) in signal communication with the control system (24), the sensor (90) being configured to generate a position signal (92) indicative of a position of the output member (20) about the output axis (48).

2. The lock device (12a; 12b) according to claim 1, wherein the output member (20) is a tailpiece.

3. The lock device (12a; 12b) according to any of the preceding claims,
wherein the output member (20) is configured to engage a lock follower (40a) of a lock case (14).

4. The lock device (12a; 12b) according to any of the preceding claims,
wherein the control system (24) is configured to command issuance of a feedback (114, 122) to a user based on the position signal (92) or an absence of the position signal (92).

5. The lock device (12a; 12b) according to claim 4, wherein the control system (24) is configured to command issuance of the feedback (122) when the output member (20) is in one of at least one target position (102, 116).

6. The lock device (12a; 12b) according to claim 4 or 5, wherein the control system (24) is configured to command issuance of a first type of feedback (114) when the output member (20) is not in a target position (102, 116), and to command issuance of a second type of feedback (122), different from the first type of feedback (114), when the output member (20) is in one of at least one target position (102, 116).

7. The lock device (12a; 12b) according to claim 5 or 6, when depending on claim 3, wherein the at least one target position (102, 116) comprises a locked target position (116) corresponding to a locked follower position (61) of the lock follower (40a), and an unlocked target position (102) corresponding to an unlocked follower position (104) of the lock follower (40a).

8. The lock device (12a; 12b) according to any of the preceding claims,
wherein the sensor (90) is configured to sense the position of the output member (20).

9. The lock device (12a; 12b) according to any of the preceding claims,
wherein the sensor (90) is a proximity sensor.

10. The lock device (12a; 12b) according to claim 9, wherein the lock device (12a; 12b) comprises at least one proximity target (88, 88a, 88b), and wherein proximity of each proximity target (88, 88a, 88b), as sensed by the sensor (90), corresponds to a unique position of the output member (20) about the output axis (48).

11. The lock device (12a; 12b) according to any of the preceding claims, further comprising an electromagnetic generator (30) arranged to electrically power the coupling device (22a; 22b) and the control system (24), wherein the generator (30) is arranged to be driven to harvest electric energy by rotation of the input member (18) about the input axis (46).

12. The lock device (12a; 12b) according to claim 11, wherein the control system (24) is configured to determine the position of the output member (20) additionally based on a voltage of the generator (30).

13. A lock system (10) comprising a lock case (14) having a lock follower (40a) and the lock device (12a; 12b) according to any of the preceding claims, wherein the output member (20) engages the lock follower (40a).

14. The lock system (10) according to claim 13, wherein the control system (24) is configured to determine whether the lock case (14) is in a locked position (120) or an unlocked position (106) based on the position signal (92).

## Patentansprüche

1. Verriegelungsvorrichtung (12a, 12b), umfassend:
- ein Eingangselement (18), das um eine Eingangsachse (46) drehbar ist;
- einen manuell drehbaren Knopf (26), der am Eingangselement (18) befestigt ist;
- ein Ausgangselement (20), das um eine Ausgangsachse (48) drehbar ist;
- eine elektromechanische Kupplungsvorrichtung (22a; 22b), die dazu konfiguriert ist, einen entkuppelten Zustand (68), in dem sich das Eingangselement (18) frei um die Eingangsachse (46) drehen kann und eine Drehung des Eingangselements (18) um die Eingangsachse (46) nicht auf eine Drehung des Ausgangselements (20) um die Ausgangsachse (48) übertragen wird, und einen gekuppelten Zustand (98), in dem eine Drehung des Eingangselements (18) um die Eingangsachse (46) auf eine Drehung des Ausgangselements (20) um die Ausgangsachse (48) übertragen werden kann, einzunehmen;
- ein elektrisches Steuersystem (24), das dazu konfiguriert ist, die Kupplungsvorrichtung (22a; 22b) so zu steuern, dass sie zwischen dem entkuppelten Zustand (68) und dem gekuppelten Zustand (98) umschaltet; und
- einen Sensor (90) in Signalverbindung mit dem Steuersystem (24), wobei der Sensor (90) dazu konfiguriert ist, ein Positionssignal (92) zu erzeugen, das eine Position des Ausgangselements (20) um die Ausgangsachse (48) angibt.

2. Verriegelungsvorrichtung (12a; 12b) nach Anspruch 1, wobei das Ausgangselement (20) ein Endstück ist.

3. Verriegelungsvorrichtung (12a; 12b) nach einem der vorstehenden Ansprüche, wobei das Ausgangselement (20) dazu konfiguriert ist, mit einer Schlossnuss (40a) eines Schlosskastens (14) in Eingriff zu gelangen.

4. Verriegelungsvorrichtung (12a; 12b) nach einem der vorstehenden Ansprüche, wobei das Steuersystem (24) dazu konfiguriert ist, basierend auf dem Positionssignal (92) oder einem Fehlen des Positionssignals (92) die Ausgabe einer Rückmeldung (114, 122) an einen Benutzer zu befehlen.

5. Verriegelungsvorrichtung (12a; 12b) nach Anspruch 4, wobei das Steuersystem (24) dazu konfiguriert ist, eine Ausgabe der Rückmeldung (122) zu befehlen, wenn sich das Ausgangselement (20) in einer von mindestens einer Zielposition (102, 116) befindet.

6. Verriegelungsvorrichtung (12a; 12b) nach Anspruch 4 oder 5, wobei das Steuersystem (24) dazu konfiguriert ist, eine Ausgabe einer ersten Art von Rückmeldung (114) zu befehlen, wenn sich das Ausgabeelement (20) nicht in einer Zielposition (102, 116) befindet, und eine Ausgabe einer zweiten Art von Rückmeldung (122), die sich von der ersten Art von Rückmeldung (114) unterscheidet, zu befehlen, wenn sich das Ausgabeelement (20) in einer von mindestens einer Zielposition (102, 116) befindet.

7. Verriegelungsvorrichtung (12a; 12b) nach Anspruch 5 oder 6, sofern abhängig von Anspruch 3, wobei die mindestens eine Zielposition (102, 116) eine verriegelte Zielposition (116), die einer verriegelten Nussposition (61) der Schlossnuss (40a) entspricht, und eine entriegelte Zielposition (102), die einer entriegelten Nussposition (104) der Schlossnuss (40a) entspricht, umfasst.

8. Verriegelungsvorrichtung (12a; 12b) nach einem der vorstehenden Ansprüche, wobei der Sensor (90) dazu konfiguriert ist, die Position des Ausgangselements (20) zu erfassen.

9. Verriegelungsvorrichtung (12a; 12b) nach einem der vorstehenden Ansprüche, wobei der Sensor (90) ein Näherungssensor ist.

10. Verriegelungsvorrichtung (12a; 12b) nach Anspruch 9, wobei die Verriegelungsvorrichtung (12a; 12b) mindestens ein Näherungsziel (88, 88a, 88b) umfasst und wobei die Nähe jedes Näherungsziels (88, 88a, 88b), wie sie vom Sensor (90) erfasst wird, einer eindeutigen Position des Ausgangselements (20) um die Ausgangsachse (48) entspricht.

11. Verriegelungsvorrichtung (12a; 12b) nach einem der vorstehenden Ansprüche, die weiter einen elektromagnetischen Generator (30) umfasst, der dazu eingerichtet ist, die Kupplungsvorrichtung (22a; 22b) und das Steuersystem (24) mit Strom zu versorgen, wobei der Generator (30) dazu eingerichtet ist, durch Drehung des Eingangselements (18) um die Eingangsachse (46) angetrieben zu werden, um elektrische Energie zu gewinnen.

12. Verriegelungsvorrichtung (12a; 12b) nach Anspruch 11, wobei das Steuersystem (24) dazu konfiguriert ist, die Position des Ausgangselements (20) zusätzlich basierend auf einer Spannung des Generators (30) zu bestimmen.

13. Verriegelungssystem (10), das einen Schlosskasten (14), der eine Schlossnuss (40a) aufweist, und die Verriegelungsvorrichtung (12a; 12b) nach einem der vorstehenden Ansprüche umfasst, wobei das Ausgangselement (20) in die Schlossnuss (40a) eingreift.

14. Verriegelungssystem (10) nach Anspruch 13, wobei das Steuersystem (24) dazu konfiguriert ist, basierend auf dem Positionssignal (92) zu bestimmen, ob sich der Schlosskasten (14) in einer verriegelten Position (120) oder einer entriegelten Position (106) befindet.

## Revendications

1. Dispositif de verrouillage (12a ; 12b) comprenant :
- un élément d'entrée (18) rotatif autour d'un axe d'entrée (46) ;
- un bouton (26) rotatif manuellement fixé à l'élément d'entrée (18) ;
- un élément de sortie (20) rotatif autour d'un axe de sortie (48) ;
- un dispositif de couplage électromécanique (22a ; 22b) configuré pour adopter un état découplé (68), dans lequel l'élément d'entrée (18) peut tourner librement autour de l'axe d'entrée (46) et la rotation de l'élément d'entrée (18) autour de l'axe d'entrée (46) n'est pas transmise à une rotation de l'élément de sortie (20) autour de l'axe de sortie (48), et un état couplé (98), dans lequel la rotation de l'élément d'entrée (18) autour de l'axe d'entrée (46) peut être transmise à une rotation de l'élément de sortie (20) autour de l'axe de sortie (48) ;
- un système de commande électrique (24) configuré pour commander le dispositif de couplage (22a ; 22b) pour commuter entre l'état découplé (68) et l'état couplé (98) ; et
- un capteur (90) en communication de signal avec le système de commande (24), le capteur (90) étant configuré pour générer un signal de position (92) indiquant une position de l'élément de sortie (20) autour de l'axe de sortie (48).

2. Dispositif de verrouillage (12a ; 12b) selon la revendication 1, dans lequel l'élément de sortie (20) est un about.

3. Dispositif de verrouillage (12a ; 12b) selon l'une quelconque des revendications précédentes, dans lequel l'élément de sortie (20) est configuré pour venir en prise avec un suiveur de verrouillage (40a) d'un boîtier de verrouillage (14).

4. Dispositif de verrouillage (12a ; 12b) selon l'une quelconque des revendications précédentes, dans lequel le système de commande (24) est configuré pour ordonner l'émission d'une rétroaction (114, 122) à un utilisateur sur la base du signal de position (92) ou d'une absence du signal de position (92).

5. Dispositif de verrouillage (12a ; 12b) selon la revendication 4, dans lequel le système de commande (24) est configuré pour ordonner l'émission de la rétroaction (122) lorsque l'élément de sortie (20) est dans l'une d'au moins une position cible (102, 116).

6. Dispositif de verrouillage (12a ; 12b) selon la revendication 4 ou 5, dans lequel le système de commande (24) est configuré pour ordonner l'émission d'un premier type de rétroaction (114) lorsque l'élément de sortie (20) n'est pas dans une position cible (102, 116), et pour ordonner l'émission d'un second type de rétroaction (122), différent du premier type de rétroaction (114), lorsque l'élément de sortie (20) est dans l'une d'au moins une position cible (102, 116).

7. Dispositif de verrouillage (12a ; 12b) selon la revendication 5 ou 6, lorsqu'elle dépend de la revendication 3, dans lequel la au moins une position cible (102, 116) comprend une position cible verrouillée (116) correspondant à une position de suiveur verrouillée (61) du suiveur de verrouillage (40a), et une position cible déverrouillée (102) correspondant à une position de suiveur déverrouillée (104) du suiveur de verrouillage (40a).

8. Dispositif de verrouillage (12a ; 12b) selon l'une quelconque des revendications précédentes, dans lequel le capteur (90) est configuré pour détecter la position de l'élément de sortie (20).

9. Dispositif de verrouillage (12a ; 12b) selon l'une quelconque des revendications précédentes, dans lequel le capteur (90) est un capteur de proximité.

10. Dispositif de verrouillage (12a ; 12b) selon la revendication 9, dans lequel le dispositif de verrouillage (12a ; 12b) comprend au moins une cible de proximité (88, 88a, 88b), et dans lequel la proximité de chaque cible de proximité (88, 88a, 88b), telle que détectée par le capteur (90), correspond à une position unique de l'élément de sortie (20) autour de l'axe de sortie (48).

11. Dispositif de verrouillage (12a ; 12b) selon l'une quelconque des revendications précédentes, comprenant en outre un générateur électromagnétique (30) conçu pour alimenter électriquement le dispositif de couplage (22a ; 22b) et le système de commande (24), dans lequel le générateur (30) est conçu pour être entraîné afin de récolter de l'énergie électrique par rotation de l'élément d'entrée (18) autour de l'axe d'entrée (46).

12. Dispositif de verrouillage (12a ; 12b) selon la revendication 11, dans lequel le système de commande (24) est configuré pour déterminer la position de l'élément de sortie (20) en plus sur la base d'une tension du générateur (30).

13. Système de verrouillage (10) comprenant un boîtier de verrouillage (14) présentant un suiveur de verrouillage (40a) et le dispositif de verrouillage (12a ; 12b) selon l'une quelconque des revendications précédentes, dans lequel l'élément de sortie (20) vient en prise avec le suiveur de verrouillage (40a).

14. Système de verrouillage (10) selon la revendication 13, dans lequel le système de commande (24) est configuré pour déterminer si le boîtier de verrouillage (14) est dans une position verrouillée (120) ou une position déverrouillée (106) sur la base du signal de position (92).
